# EUROPÄISCHE PATENTANMELDUNG

(11) **EP 4 412 054 A1**
(43) Veröffentlichungstag der Anmeldung: **07.08.2024**
(21) Anmeldenummer: 23154946.0
(22) Anmeldetag: 03.02.2023
(51) Int. Cl.: H02K 5/15, H02K 5/22, H02K 7/14, H02K 11/33, H02K 5/16

(54) **MOTORKABELHALTERUNG**

(71) Anmelder: C. & E. Fein GmbH, 73529 Schwäbisch-Gmünd-Bargau (DE)
(72) Erfinder: Justinski, Klaus, 73579 Schechingen (DE)
(74) Vertreter: Wallinger Ricker Schlotter Tostmann

(57) **Zusammenfassung**

Motorkabelhalterung (10) zur Fixierung mindestens eines mit einem Kontaktpin (24) eines Elektromotors (50) verbundenen, insbesondere verlöteten, flexiblen Endabschnitts (28) einer elektrischen Leitung (26), wobei der flexible Endabschnitt (28) einen am Kontaktpin endenden Versteifungsabschnitt (28b) und einen sich daran anschließenden flexiblen Abschnitt (28a) umfasst, aufweisend einen Halterungskörper (12) mit wenigstens einem Haltemittel (14), insbesondere einer Klemmrippe (15), wobei das wenigstens eine Haltemittel (14) ausgestaltet ist, den flexiblen Endabschnitt (28) der elektrischen Leitung (26) zu fixieren, um eine Relativbewegung des flexiblen Abschnitts (28a) relativ zum Versteifungsabschnitt (28b) einzuschränken, wobei der Halterungskörper (12) ausgestaltet ist, an dem Elektromotor (50) anbringbar zu sein.

## Beschreibung

Die Erfindung betrifft eine Motorkabelhalterung, einen Elektromotor aufweisend eine derartige Motorkabelhalterung sowie ein Elektrowerkzeug aufweisend eine derartige Motorkabelhalterung.

Die Bewegung eines Elektromotors zum Antrieb eines Elektrowerkzeugs führt zu Vibrationen. Während verschiedene Ansätze zur Dämpfung der Vibrationen im Bereich des Griffstücks Anwendern die Handhabbarkeit des Elektrowerkzeugs erleichtern können, beeinflussen Vibrationen auch die Elektronik innerhalb des Elektrowerkzeugs. Die Vibrationen sind dabei unter bestimmten Umständen nachteilig auf schwingungsbelastete Bauteile, was zu Einschränkungen in der Funktionalität des Elektrowerkzeugs führen kann. Insbesondere steife Bauteile werden hierbei im Vergleich zu flexiblen Bauteilen durch die Wechselbelastung der Vibrationen stärker belastet. Hierfür werden steife Bauteile möglichst spielfrei an dem Elektromotor angebracht, um die Wechselbelastung gering zu halten, während bewegliche Bauteile, wie mit dem Motor verbundene, flexible Kabel, lediglich an den Motor angelötet werden. Flexible Kabel können insbesondere elastisch verbiegbar sein, oder nicht elastisch verbiegbar sein.

Es hat sich jedoch gezeigt, dass durch den Lötprozess und die damit einhergehenden Veränderungen des elektrischen Leiters die Flexibilität des Kabels im Bereich der Lötstelle abnimmt. Hierdurch konnte zwischen dem mit Lötzinn versehenen versteiften Leiteranteil und dem von Lötzinn freien, flexibleren Leiter häufiger ein Kabelbruch beobachtet werden, der zum Versagen des elektrischen Antriebs des Elektrowerkzeugs führte.

Es besteht daher Bedarf für einen verbesserten Vibrationsschutzes kritischer Bereiche vibrationsbelasteter Leiter in - insbesondere oszillierenden - Elektrowerkzeugen.

Die Erfindung löst diese Aufgabe durch die Motorkabelbefestigung gemäß Anspruch 1, sowie einen Elektromotor gemäß Anspruch 13 und einem Elektrowerkzeug gemäß Anspruch 14. Bevorzugte Ausgestaltungen der Erfindung sind Gegenstände der abhängigen Ansprüche und ergeben sich aus der Beschreibung der Erfindung und aus den Figuren.

Der Vorteil der Erfindung liegt darin, dass durch die erfindungsgemäße Motorkabelhalterung die materialermüdende Wirkung der durch die Vibrationen entstehenden Schwingungen im Bereich des Übergangs zwischen einem steiferen Abschnitt und einem flexibleren Abschnitt eines Leiterendabschnitts, insbesondere in einem Bereich nahe einer Lötstelle, reduziert wird, idealerweise ganz vermieden und somit Kabelbruch vermieden wird.

Erfindungsgemäß weist die Motorkabelhalterung zur Fixierung mindestens eines, an einen Kontaktpin eines Elektromotors gelöteten flexiblen Endabschnitts einer elektrischen Leitung einen Halterungskörper mit wenigstens einem Haltemittel, insbesondere einer Klemmrippe, auf. Der flexible Endabschnitt umfasst dabei einen am Kontaktpin endenden Versteifungsabschnitt und einen sich daran anschließenden flexiblen Abschnitt.

Das wenigstens eine Haltemittel ist ausgestaltet, den Endabschnitt der elektrischen Leitung zu fixieren, um eine Relativbewegung des flexiblen Abschnitts relativ zum Versteifungsabschnitt einzuschränken. Der Halterungskörper ist dabei ausgestaltet, an dem Elektromotor, insbesondere am Stator bzw. einem Statorelement, anbringbar zu sein.

Insbesondere bei auftretenden Vibrationsbelastungen wird eine Relativbeweglichkeit im Bereich des Endabschnitts der elektrischen Leitung vermieden. Der Bereich des Endabschnitts des Kabels, in dem die Relativbewegung vermieden wird, erstreckt sich vom Kontaktpin bis zum Haltemittel und umfasst den Versteifungsabschnitt insbesondere vollständig. Durch das Vermeiden der Relativbewegung wird ein Kabelbruch in diesem Bereich vermieden.

Eine elektrische Leitung im Sinne der Erfindung ist dabei ein Teil zum Transport elektrischer Energie, welche bei vorliegender Isolierung auch als Kabel bezeichnet werden kann. Da die elektrische Leitung vorzugsweise ein metallisches Material umfasst, kommt es durch das ausgehend von der Lötstelle in den Endabschnitt des Leiters eindringende Lötzinn zu einer Aussteifung des metallischen Materials des Leiters, insbesondere des Litzenbündels, im Endabschnitt, was die Entstehung eines Versteifungsabschnitts bewirkt. Hierbei verbindet das Lötzinn stoffschlüssig mehrere Litzen, wodurch die Versteifung herbeigeführt wird. Die Versteifung kann dabei auch auf andere Art entstehen, welche insbesondere andere Fügeverfahren des Leiters an einer Kontaktstelle umfassen, und ist nicht auf eine durch Lötzinn bewirkte Versteifung beschränkt. So ist auch beispielsweise ein Versteifen durch Verklemmen eines mehrlitzigen Endabschnitts bei einem Klemmkontakt möglich. Durch die Wechselbelastung, verursacht durch die Vibrationen, kommt es im Bereich des Endabschnitts zwischen dem Versteifungsabschnitt und dem flexibleren Bereich des Elektrokabels zu einer Ermüdung des Materials, was durch das entstehende Herabsetzen der Flexibilität einen Bruch der elektrischen Leitung im Bereich des Endabschnitts nach sich ziehen kann.

Ein Kontaktpin im Sinne der Erfindung stellt dabei ein Elektronikbauteil dar, das funktional ausgestaltet ist, mit einer elektrischen Leitung verbunden zu sein. Durch Löten zieht insbesondere Lötzinn in den Endabschnitt einer elektrischen Leitung, insbesondere zwischen Litzen einer Leitung, ein und versteift diese bis zu einem Bereich, an dem der Lötzinn gestoppt hat. Das Ende dieses Bereichs ist dann der kritische Bereich, an dem das Kabel durch Querbewegung brechen kann. Der gefährdete Bereich liegt zumindest teilweise, insbesondere vollständig in dem Endabschnitt, insbesondere im bzw. anliegend am Versteifungsabschnitt.

Ein Halterungskörper im Sinne der Erfindung stellt dabei ein Teil dar, das funktional ausgestaltet ist, die Motorkabelhalterung mit dem Elektromotor, insbesondere Stator, zu verbinden, insbesondere möglichst spielfrei zu verbinden, und somit eine Relativbewegung von Motorkabel und Elektromotor bzw. Stator einzuschränken. Hierfür ist der Halterungsköper vorzugsweise derart ausgestaltet, dass er mit dem Elektromotor bzw. Statorelement, insbesondere Motorbund, eine form- und/oder kraftschlüssige Verbindung eingeht. Es sind auch Ausführungsformen möglich, in denen der Halterungsköper auf den Elektromotor geschweißt, geklebt oder durch andere stoffschlüssige Fügeverfahren mit dem Elektromotor bzw. Stator verbunden ist.

Ein Haltemittel im Sinne der Erfindung stellt dabei ein Teil dar, das mit dem Halterungskörper verbunden ist, und funktional ausgestaltet ist, die elektrische Leitung am Halterungskörper zu fixieren. Das Haltemittel ist dabei vorteilhafterweise derart ausgestaltet, dass die elektrische Leitung durch Eindrücken in das Haltemittel fixiert werden kann. Dazu kann das Haltemittel gabelförmig ausgebildet sein. Ein Innendurchmesser einer Aufnahmeöffnung des Haltemittels kann dabei r, gleich oder kleiner als der Durchmesser der elektrischen Leitung oder einer Isolierung der elektrischen Leitung sein. Dabei verformt sich das Haltemittel vorzugsweise elastisch und verhakt anschließend lösbar oder unlösbar. Hierbei können Längsverschiebungen des Leiters möglich oder blockiert sein. Ferner können rotatorische Freiheitsgrade möglich oder blockiert sein.

Vorteilhafterweise weist die Motorkabelhalterung mindestens eine mit dem Halterungskörper verbundene Rasteinrichtung, insbesondere eine Rastnase, auf. Die Rasteinrichtung ist dabei ausgestaltet, mit mindestens einem Rastabschnitt des Elektromotors, insbesondere im Bereich des Statorelements bzw. Motorbunds, in eine form- und oder kraftschlüssige Verbindung bringbar zu sein. Hierbei kann die Rastnase eine Spannvorrichtung darstellen, welche die Motorkabelhalterung sicher in axialer und/oder radialer Richtung fixiert, wobei die axiale Richtung durch die Längswelle der Rotorwelle des Elektromotors definiert ist. Hierbei umgreift die Rastnase vorzugsweise einen Rastabschnitt des Statorelements bzw. Motorbundes oder eines anderen Teils des Elektromotors und schafft somit mit einem korrespondieren Teil, vorzugsweise dem Halterungskörper, eine kraft- und/oder formschlüssige Verbindung.

Vorteilhafterweise weist die Rasteinrichtung, insbesondere die Rastnase, eine Schnappverbindungsaufnahme auf. Die Schnappverbindungsaufnahme verformt sich elastisch und verschließt anschließend lösbar oder unlösbar.

Vorteilhafterweise ist der Halterungskörper ausgestaltet, über einen Presssitz mit einem Kopplungsabschnitt des Elektromotors, insbesondere im Bereich des Motorbunds des Elektromotors, verbindbar zu sein. Die zu verbindenden Teile werden so hergestellt, dass nach dem Fügen an den Verbindungsstellen eine Presspassung entsteht. Somit können Längs- und Querkräfte kraftschlüssig übertragen werden. Vorteile des Pressfügens sind eine funktionsbedingte gute Selbstzentrierung, des Weiteren ist diese Art der Verbindung auch für stoß- und wechselartige Beanspruchungen geeignet. Insbesondere durch die Vibrationsbelastung der Elemente des Elektromotors stellt eine derartige Verbindung eine geeignete Lösung dar.

Vorteilhafterweise weist die Motorkabelhalterung wenigstens eine mit dem Halterungskörper verbundene Verdrehsicherung auf. Die Verdrehsicherung ist dabei ausgestaltet, mit dem Elektromotor, vorzugsweise mit den elektrischen Kontaktpins, eine form- und/oder kraftschlüssige Verbindung einzugehen. Eine Verdrehsicherung im Sinne der Erfindung umfasst hierfür in radialer Richtung des Halterungskörpers einen Abschnitt, der ausgestaltet ist, mit einem korrespondierenden Abschnitt des Motorbundes oder eines anderen Teils des Elektromotors die form- und/oder kraftschlüssige Verbindung einzugehen und einen rotatorischen Freiheitsgrad einzuschränken.

Vorteilhafterweise ist der Halterungskörper ringförmig ausgestaltet. Dabei ist der Innendurchmesser des ringförmigen Halterungskörpers vorzugsweise entsprechend dem Außendurchmesser eines kreisförmigen Abschnitts des Statorelements bzw. Motorbunds ausgebildet bzw. geformt, um einen sicheren Presssitz der Motorkabelhalterung am Elektromotor zu ermöglichen.

Vorteilhafterweise ist die Motorkabelhalterung symmetrisch, vorzugsweise punktsymmetrisch zu einem Mittelpunkt des ringförmigen Körpers ausgeführt.

Vorzugsweise umfasst die Motorkabelhalterung mindestens zwei oder genau zwei Haltemittel und optional noch jeweils mindestens zwei Rasteinrichtungen und/oder Verdrehsicherungen. Die zwei Haltemittel sind insbesondere an gegenüberliegenden Bereichen des Halterungskörpers angeordnet, insbesondere einstückig mit diesem verbunden. Zwei Kontaktpins eines Elektromotors sind vorzugsweise auf gegenüberliegenden Hälften des Stators angeordnet.

Vorteilhafterweise ist die Motorkabelhalterung durch ein generatives Fertigungsverfahren hergestellt. Unter einem generativen Fertigungsverfahren im Sinne der Erfindung ist eine umfassende Bezeichnung für alle Fertigungsverfahren zu verstehen, bei denen Material Schicht für Schicht aufgetragen wird, um dreidimensionale Gegenstände zu erzeugen.

Dabei erfolgt der schichtweise Aufbau computergesteuert aus einem oder mehreren flüssigen oder festen Werkstoffen nach vorgegebenen Maßen und Formen. Beim Aufbau finden physikalische oder chemische Härtungs- oder Schmelzprozesse statt. Typische Werkstoffe dabei sind hierbei Kunststoffe, Kunstharze, Keramiken und speziell aufbereitete Metalle.

Vorteilhafterweise ist die Motorkabelhalterung durch ein Spritzgussverfahren hergestellt ist. Das Spritzgussverfahren ist ein Urformverfahren, das hauptsächlich in der Kunststoffverarbeitung eingesetzt wird. Dabei wird mit einer Spritzgießmaschine der jeweilige Werkstoff verflüssigt und in eine Form, dem Spritzgießwerkzeug, unter Druck eingespritzt. Im Werkzeug geht der Werkstoff durch Abkühlung oder eine Vernetzungsreaktion wieder in den festen Zustand über und wird nach dem Öffnen des Werkzeuges als Fertigteil entnommen. Mit diesem Verfahren lassen sich direkt verwendbare Formteile in großer Stückzahl kostengünstig herstellen, was bei der erfindungsgemäßen Motorkabelhalterung besonders vorteilhaft ist.

Vorteilhafterweise ist die Motorkabelhalterung einstückig hergestellt. Unter einstückig hergestellt im Sinne der Erfindung ist dabei eine Motorkabelhalterung zu verstehen, welche nach dem Urformen und möglichen Trennvorgängen keinen Fügeprozessen unterliegt. Sowohl generative Herstellungsverfahren als auch Spritzgussverfahren bieten die dabei die Möglichkeit zur Herstellung einer einstückigen Motorkabelhalterung, wobei andere Herstellungsverfahren ausdrücklich im Sinne der vorliegenden Offenbarung sind.

Vorteilhafterweise weist die Motorkabelhalterung ein Haltemittel mit Klemmrippen in Form einer Gabel auf. Der Abstand der Klemmrippen, die Öffnung des Haltemittels ist geringer als der Durchmesser des zu klemmenden Kabels. Das Haltemittel ist über einen Steg mit dem Halterungskörper verbunden, insbesondere einstückig verbunden.

Insbesondere bei einem ringförmigen oder spangenförmigen Halterungskörper ist das eine Haltemittel an einer radial nach außen weisenden Position des Halterungskörpers, bzw. des Stegs, angeordnet, insbesondere weist ein offenes Ende eines Leitungsaufnahmeabschnitts des Haltemittels radial nach außen. Dadurch lässt sich die Leitung einfach montieren und fixieren.

Vorteilhafterweise umfasst die Motorkabelhalterung ein Polyamid, vorzugsweise PA12 oder PA6 gefüllt mit Zusatzstoffen oder ungefüllt. Polyamide sind lineare Polymere mit sich regelmäßig wiederholenden Amidbindungen entlang der Hauptkette und zählen zu den teilkristallinen thermoplastische Polymeren. Diese zeichnen sich durch eine hohe Festigkeit, Steifigkeit und Zähigkeit aus, besitzen eine gute Chemikalienbeständigkeit und Verarbeitbarkeit. Neben Polyamiden sind auch weitere Polymere oder vergleichbare Kunststoffe als Werkstoff für die Motorkabelhalterung möglich. Es sind auch verschiedene Werkstoffe für verschiedene Komponenten der Motorkabelhalterung möglich.

Erfindungsgemäß weist ein Elektromotor eine Motorkabelhalterung, ein Statorelement bzw. einen Motorbund, aus dem insbesondere ein Ende einer rotierenden Welle des Motors austritt, und mindestens eine, insbesondere zwei elektrische Leitungen mit jeweils einem flexiblen Endabschnitt auf. Der Elektromotor weist ferner mindestens einen, insbesondere zwei Kontakpins auf, wobei der flexible Endabschnitt der elektrischen Leitung an den einen Kontaktpin gelötet ist. Die Motorkabelhalterung weist ferner einen Halterungskörper und mindestens ein oder zwei Haltemittel, vorzugsweise genau zwei Haltemittel, auf, wobei der Halterungskörper mit dem Statorelement bzw. Motorbund verbunden ist und das Haltemittel den Endabschnitt des mindestens einen elektrischen Leiters fixiert, um eine Bewegung des Endabschnitts der elektrischen Leitung einzuschränken.

Die in der Beschreibung der Motorkabelhalterung beschriebenen vorteilhaften Ausführungsformen sind dabei teilweise oder erweitert auf den erfindungsgemäßen Elektromotor übertragbar.

Erfindungsgemäß weist ein Elektrowerkzeug einen Elektromotor der genannten Bauart auf, wobei der Elektromotor ein Gleichstrommotor ist.

Die in der Beschreibung der Motorkabelhalterung beschriebenen vorteilhaften Ausführungsformen sind dabei teilweise oder erweitert auf das erfindungsgemäße Elektrowerkzeug übertragbar.

Vorteilhafterweise ist das Elektrowerkzeug ein oszillierendes Werkzeug. Oszillierende Werkzeuge oder auch Multitools bzw. Multicutter sind handgeführte Werkzeugmaschinen, die im Bereich Schleifen, Schaben, Schneiden und Trennen eingesetzt werden.

Im Folgenden wird die Erfindung an mehreren in den Zeichnungen dargestellten Ausführungsbeispielen näher erläutert; es zeigen:
Fig. 1 eine erste perspektivische Ansicht einer ersten Ausführungsform der erfindungsgemäßen Motorkabelhalterung,
Fig. 2 eine zweite perspektivische Ansicht einer ersten Ausführungsform der erfindungsgemäßen Motorkabelhalterung,
Fig. 3 eine perspektivische Ansicht des erfindungsgemäßen Elektromotors mit einer Motorkabelhalterung gemäß der ersten Ausführungsform,
Fig. 4 eine perspektivische Ansicht des erfindungsgemäßen Elektromotors mit einer Motorkabelhalterung gemäß der zweiten Ausführungsform,
Fig. 5 eine perspektivische Ansicht des erfindungsgemäßen Elektrowerkzeugs mit einer Motorkabelhalterung gemäß der ersten Ausführungsform,
Fig. 6 eine perspektivische Ansicht des erfindungsgemäßen Elektrowerkzeugs mit einer Motorkabelhalterung gemäß der zweiten Ausführungsform,
Fig. 7 einen Schnitt durch die Haltemittel eines erfindungsgemäßen Elektromotors mit einer Motorkabelhalterung gemäß der ersten Ausführungsform,
Fig. 8 einen Schnitt durch die Rastnasen eines erfindungsgemäßen Elektromotors mit einer Motorkabelhalterung gemäß der ersten Ausführungsform,
Fig. 9 einen Ausschnitt eines Schnitts durch die Rastnasen eines erfindungsgemäßen Elektrowerkzeugs mit einer Motorkabelhalterung gemäß der ersten Ausführungsform,
Fig. 10 einen Schnitt durch die Rastnasen eines erfindungsgemäßen Elektrowerkzeugs mit einer Motorkabelhalterung gemäß der ersten Ausführungsform.

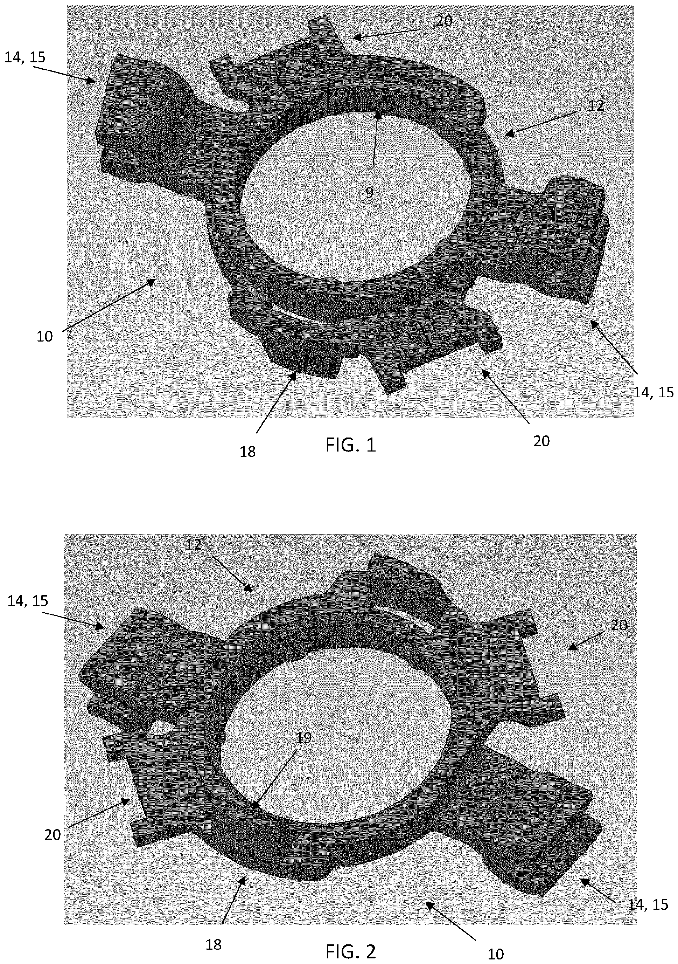

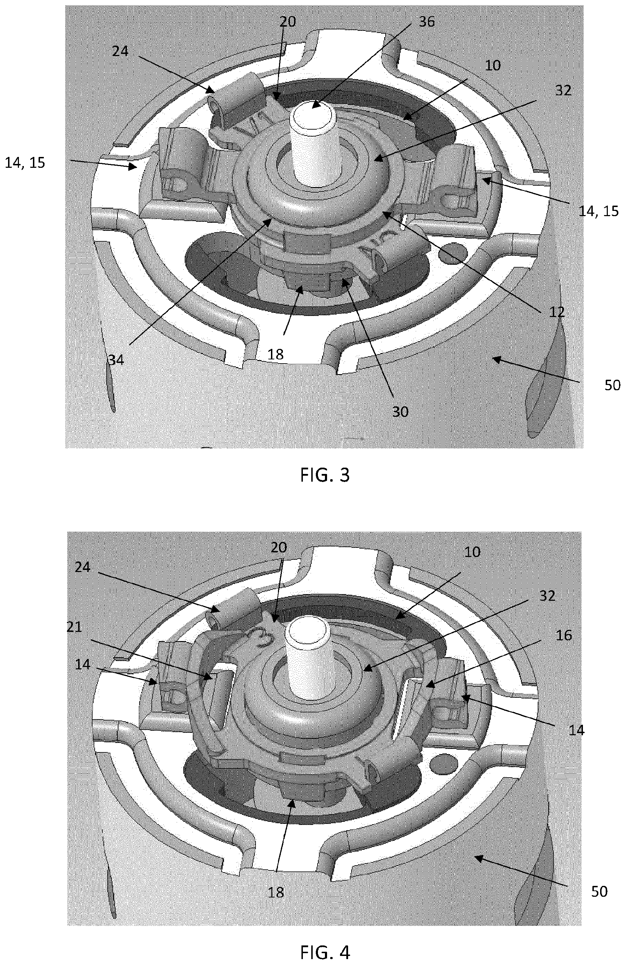

Fig. 1 zeigt eine erste perspektivische Ansicht einer ersten Ausführungsform der erfindungsgemäßen Motorkabelhalterung 10. Die erste Ausführungsform unterscheidet sich von einer zweiten Ausführungsform durch einen in der zweiten Ausführungsform ausgestalteten Steg 16, welcher im Folgenden in Fig. 4 beschrieben werden soll. Die Motorkabelhalterung 10 zur Fixierung an einen Kontaktpin 24 eines Elektromotors 50 gelöteten, flexiblen Endabschnitte 28 einer elektrischen Leitung 26 weist in der gezeigten Ausführungsform einen Halterungskörper 12 mit zwei Haltemitteln 14 auf. Im gezeigten Ausführungsbeispiel ist der Halterungskörper 12 ringförmig ausgestaltet und weist an seinen Innenflächen Radialvorsprünge 9 auf, welche funktional eingerichtet sind, an einem Motorbund 32 anzuliegen. Die Haltemittel 14 sind dabei ausgestaltet, einen flexiblen Endabschnitt 28 einer elektrischen Leitung 26 zu fixieren, wobei der flexible Endabschnitt 28 einen am Kontaktpin endenden Versteifungsabschnitt 28b und einen sich daran anschließenden flexiblen Abschnitt 28a umfasst, um eine Relativbewegung des flexiblen Abschnitts 28a zum Versteifungsabschnitt 28b einzuschränken. Hierfür weisen die Haltemittel 14 eine gabelförmige Klemmrippe 15 auf, welche ausgestaltet ist, die flexiblen Endabschnitte 28 zu umgreifen und hierdurch durch die im Betrieb des oszillierenden Elektrowerkzeug entstehenden unerwünschte Querbewegungen zu reduzieren. Die Motorkabelhalterung 10 weist ferner zwei gegenüberliegende, mit dem Halterungskörper 12 verbundene Rasteinrichtungen 18, im gezeigten Ausführungsbeispiel Rastnasen 19, auf.

Ferner weist die Motorkabelhalterung 10 im gezeigten Ausführungsbeispiel zwei mit dem Halterungskörper 12 verbundene Verdrehsicherungen 20 auf. Die Verdrehsicherungen 20 sind ausgestaltet, mit dem Elektromotor 50, vorzugsweise mit den Kontaktpins 24, eine form- und oder kraftschlüssige Verbindung einzugehen. Die Verdrehsicherungen 20 umfassen dabei in radialer Richtung des Halterungskörpers 12 einen Abschnitt, der ausgestaltet ist, mit einem korrespondierenden Abschnitt des Motorbundes 32 oder eines anderen Teils des Elektromotors 50 eine formschlüssige Verbindung einzugehen und somit einen rotatorischen Freiheitsgrad einzuschränken. Im gezeigten Ausführungsbeispiel umfassen die Verdrehsicherungen 20 einen radial nach außen verlaufenden klammerartigen Vorsprung, welcher ausgestaltet ist, einen Kontaktpin 24 zu umgreifen und somit die Motorkabelhalterung vor Verdrehen zu sichern. Im gezeigten Ausführungsbeispiel ist die Motorkabelhalterung 10 punktsymmetrisch zum ringförmigen Körper 12 ausgeführt ist.

Fig. 2 zeigt eine zweite perspektivische Ansicht der ersten Ausführungsform der erfindungsgemäßen Motorkabelhalterung 10 gemäß Fig. 1. Hierbei ist die Motorkabelhalterung 10 in einer um 180° gedrehten Ansicht gezeigt, um die Rasteinrichtungen 18 besser darzustellen. Die Rasteinrichtungen 18 weisen in der gezeigten Ausführungsform zwei Rastnasen 19 auf. Hierbei sind die Rastnasen 19 eingerichtet einen Rastabschnitt 30 des Motorbundes 32 zu umgreifen, und schaffen somit eine kraft- und/oder formschlüssige Verbindung. Die Rastnase 19 weist dabei eine Schnappverbindungsaufnahme auf. Die Schnappverbindungsaufnahme verformt sich elastisch und verschließt anschließend.

Fig. 3 zeigt eine perspektivische Ansicht des erfindungsgemäßen Elektromotors 50 mit einer Motorkabelhalterung 10 gemäß der ersten Ausführungsform. Der Elektromotor 50 weist eine Motorkabelhalterung 10 auf, die an einem Motorbund 32, aus dem ein Ende einer rotierenden Welle 36 des Elektromotors 50 austritt, befestigt ist. Die Motorkabelhalterung 10 weist einen Halterungskörper 12 und ein Haltemittel 14 auf, wobei der Halterungskörper 12 mit dem Motorbund 32 verbunden ist und das Haltemittel 14 ausgestaltet ist, die flexiblen Endabschnitte 28 der elektrischen Leitungen 26 zu fixieren, um eine Relativbewegung innerhalb der flexiblen Endabschnitte 28 der elektrischen Leitung 26 und relativ zur Lötstelle einzuschränken, um Kabelbruch vorzubeugen.

Der Halterungskörper 12 ist dabei über einen Presssitz mit einem Kopplungsabschnitt 34 des Elektromotors 50 an dem Motorbund 32 des Elektromotors 50 verbunden, um Längs- und Querkräfte kraftschlüssig zu übertragen. Hierdurch kommt es zu einer guten Selbstzentrierung der Motorkabelhalterung 10 an dem Elektromotor 50, welche auch für beim Betrieb auftretende stoß- und wechselartige Beanspruchungen geeignet ist. Insbesondere aufgrund der Vibrationsbelastung der Motorkabelhalterung 10 stellt eine derartige Verbindung eine geeignete Lösung dar. Die Rasteinrichtung 18 ist dabei ausgestaltet, mit mindestens einem Rastabschnitt 30 des Elektromotors 50, insbesondere des Motorbunds 32, in eine form- und oder kraftschlüssige Verbindung bringbar zu sein. Die Rasteinrichtung 18 weist hierfür eine wie in Fig. 2 beschriebene Schnappverbindungsaufnahme auf.

Fig. 4 zeigt eine perspektivische Ansicht des erfindungsgemäßen Elektromotors 50 mit einer Motorkabelhalterung 10 gemäß der zweiten Ausführungsform. Die zweite Ausführungsform entspricht der ersten Ausführungsform, wobei an der zweiten Ausführungsform ferner ein Steg 16 im Bereich der Haltemittel 14 an dem Halterungskörper 12 angeformt ist. Im Vergleich zur ersten Ausführungsform ist der Zugang zur Lötstelle in der zweiten Ausführungsform durch den Steg 16 etwas eingeschränkt. Durch den Steg 16 wird die Stabilität des Halterungskörpers 12 erhöht. Dadurch kann der Halterungskörper 12 Öffnungen 21 aufweisen, ohne dass seine Stabilität beeinflusst wird. Die Öffnungen 21 ermöglichen eine einfache Montage des Halterungskörpers 12 und weiteren Teilen des Antriebs. Durch die platzschaffenden Öffnungen 21 kann die Anpassung von Teilen, beispielsweise einem Elektronikbecher, vermieden werden.

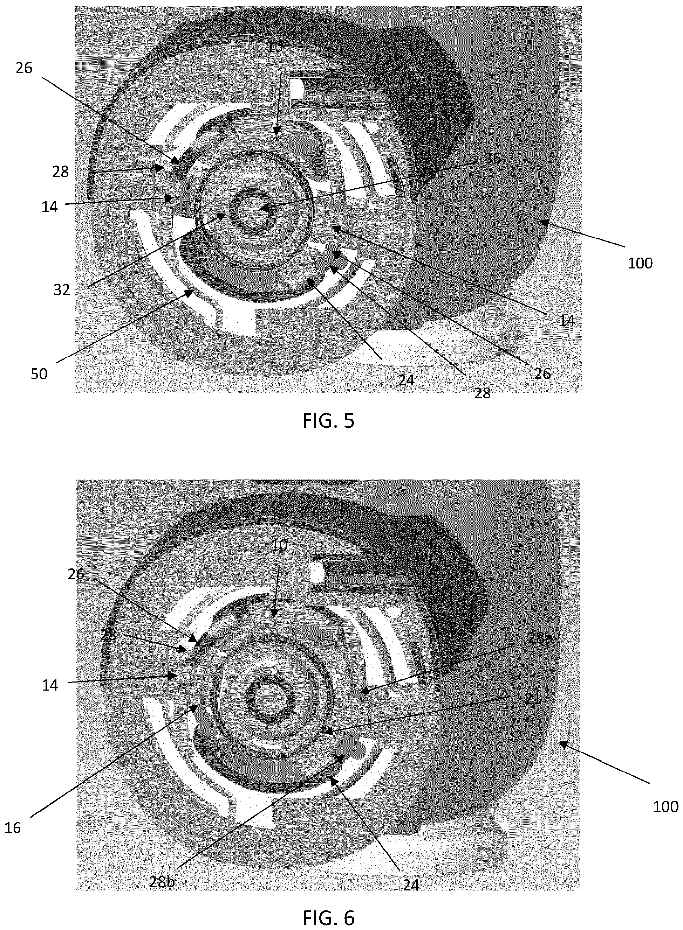

Fig. 5 zeigt eine perspektivische Ansicht des erfindungsgemäßen Elektrowerkzeugs 100 mit einer Motorkabelhalterung 10 gemäß der ersten Ausführungsform ohne Steg 16. Die Motorkabelhalterung 10 ist dabei an einem Motorbund 32 des Elektromotors 50 angebracht, aus dem ein Ende einer rotierenden Welle 36 des Elektromotors 50 austritt. Das Elektrowerkzeug 100 weist im gezeigten Ausführungsbeispiel zwei elektrische Leitungen 26, mit jeweils einem flexiblen Endabschnitt 28 auf, welche jeweils an zwei Kontakpins 24 gelötet sind. Die Motorkabelhalterung 10 weist einen Halterungskörper 12 und zwei Haltemittel 14 auf. Der Halterungskörper 12 ist mit dem Motorbund 32 verbunden und die Haltemittel 14 fixieren die flexiblen Endabschnitte 28 der elektrischen Leitungen 26, um eine Relativbewegung innerhalb der flexiblen Endabschnitte 28 der elektrischen Leitungen 26 einzuschränken, um Kabelbruch zu vermeiden.

Fig. 6 zeigt eine perspektivische Ansicht des erfindungsgemäßen Elektrowerkzeugs mit einer Motorkabelhalterung gemäß der zweiten Ausführungsform. Die zweite Ausführungsform entspricht der in Fig. 4 gezeigten Ausführungsform, in der ein Steg 16 im Bereich der Haltemittel 14 an dem Halterungskörper 12 angeformt ist. Im Vergleich zu der in Fig. 5 gezeigten ersten Ausführungsform ist zu erkennen, dass der Zugang zur Lötstelle in der zweiten Ausführungsform durch den Steg 16 eingeschränkt ist. Zusätzlich sind die Öffnungen 21 des Halterungskörpers 12 zu erkennen.

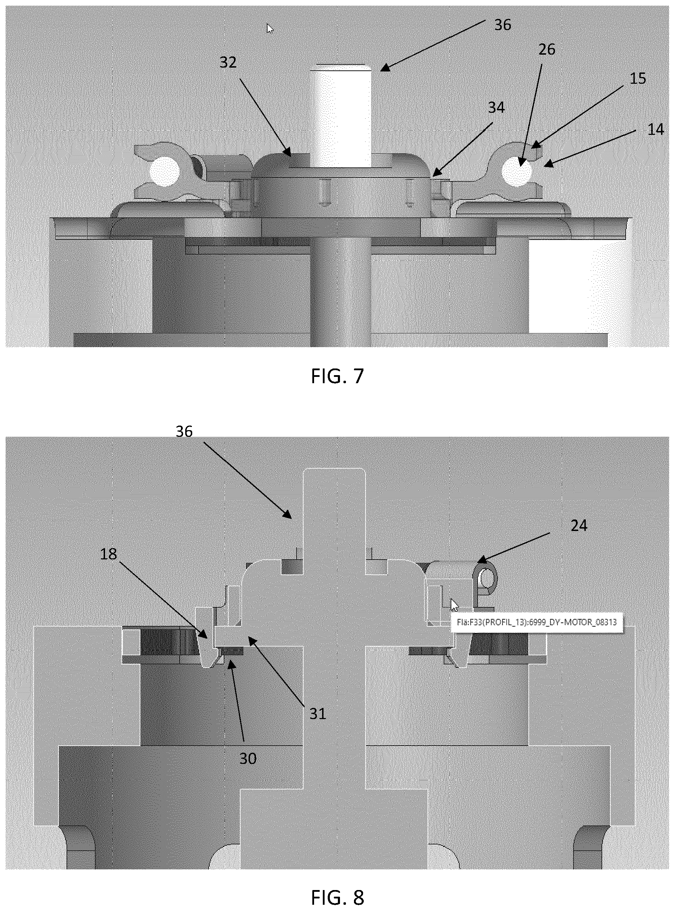

Fig. 7 zeigt einen Schnitt durch die Haltemittel 14 eines erfindungsgemäßen Elektromotors mit einer Motorkabelhalterung 10 gemäß der ersten Ausführungsform, wobei eine elektrische Leitung 26 in der Klemmrippe 15 des Haltemittels 14 fixiert ist. In diesem Zustand entspricht der Innendurchmesser der Haltemittels 14 dabei gleich dem Durchmesser der in das Haltemittel 14 geklemmten elektrischen Leitung 26. Da der Abstand von 1,7mm der Klemmrippen 15, die Öffnung zueinander geringer als der Durchmesser von ca. 2,4 mm der elektrischen Leitung 26 ist, verformen sich bei der Montage der elektrischen Leitung 26 das Haltemittel 14, insbesondere die Klemmrippen 15 elastisch, und verschließt anschließend lösbar. Dadurch wird die elektrische Leitung 26 insbesondere dessen flexibler Endabschnitt 28 fixiert und ortsfest geklemmt. Der Halterungskörper 12 ist dabei, wie in Fig. 3 beschrieben, über einen Presssitz mit einem Kopplungsabschnitt 34 des Elektromotors 50 an dem Motorbund 32 des Elektromotors 50 verbunden, um Längs- und Querkräfte kraftschlüssig zu übertragen. Die Motorkabelhalterung 10 ist hierdurch an dem Elektromotor 50 zentriert.

Fig. 8 zeigt einen Schnitt durch die Rastnasen 19 einer Rasteinrichtung 14 eines erfindungsgemäßen Elektromotors 50 mit einer Motorkabelhalterung 10 gemäß der ersten Ausführungsform. Die Rastnasen 19 der Rasteinrichtung 18 umgreifen dabei einen kreisförmigen Steg 31 des Motorbunds 32 und fixieren hierdurch die Motorkabelhalterung 10 in axialer Richtung am Elektromotor 50. Die Rasteinrichtung 18 ist dabei ausgestaltet, mit mindestens einem Rastabschnitt 30 des Elektromotors 50, insbesondere des Motorbunds 32, eine form- und oder kraftschlüssige Verbindung einzugehen. Die Rasteinrichtung 18 weist hierfür eine wie in Fig. 2 beschriebene Schnappverbindungsaufnahme auf.

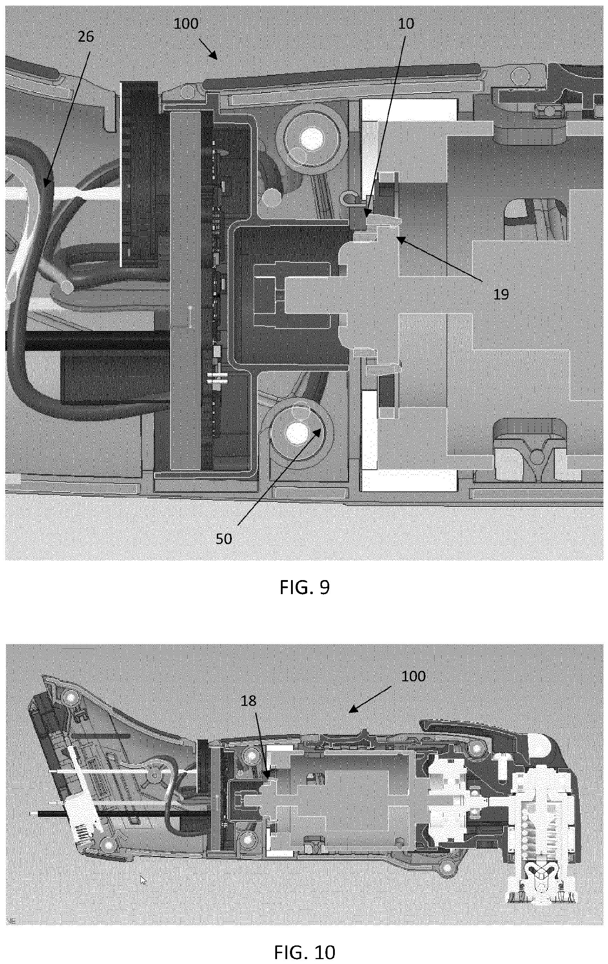

Fig. 9 zeigt einen Ausschnitt eines Schnitts durch die Rastnasen 19 einer Rastvorrichtung 18 eines erfindungsgemäßen Elektrowerkzeugs 100 mit einer Motorkabelhalterung 10 gemäß der ersten Ausführungsform. Die elektrischen Leitungen 26, welche mit einer Energiespeichereinheit des erfindungsgemäßen Elektrowerkzeugs verbunden sind, um den Elektromotor 50 anzutreiben, sind durch die Motorkabelhalterung 10 im Bereich ihres flexiblen Endabschnitts in ihrer Bewegungsfreiheit eingeschränkt, wodurch Kabelbruch vermieden werden kann.

Fig. 10zeigt einen Schnitt durch die Rastnasen 19 der Rasteinrichtung 18 eines erfindungsgemäßen Elektrowerkzeugs 100 mit einer Motorkabelhalterung 10 gemäß der ersten Ausführungsform.

Die erfindungsgemäße Motorkabelhalterung stellt somit eine vorteilhafte Lösung zur Reduzierung von Kabelbruch bei sämtlichen oszillierenden Elektrowerkzeugen dar, die starken Vibrationen und/oder starker Stoßbelastung unterliegen.

### Bezugszeichenliste

- 10: Motorkabelhalterung
- 9: Radialvorsprung
- 12: Halterungskörper
- 14: Haltemittel
- 15: Klemmrippe
- 16: Steg
- 18: Rasteinrichtung
- 19: Rastnase
- 20: Verdrehsicherung
- 21: Öffnung
- 22: kritischer Bereich
- 24: Kontaktpin
- 26: elektrische Leitung
- 28: flexibler Endabschnitt
- 28a: flexibler Abschnitt
- 28b: Versteifungsabschnitt
- 30: Rastabschnitt
- 31: Steg
- 32: Statorelement, Motorbund
- 34: Kopplungsabschnitt
- 36: rotierende Welle
- 50: Elektromotor
- 100: Elektrowerkzeug

## Patentansprüche

1. Motorkabelhalterung (10) zur Fixierung mindestens eines, mit einem Kontaktpin (24) eines Elektromotors (50) verbundenen, flexiblen Endabschnitts (28) einer elektrischen Leitung (26), wobei der flexible Endabschnitt (28) einen am Kontaktpin endenden Versteifungsabschnitt (28b) und einen sich daran anschließenden flexiblen Abschnitt (28a) umfasst, aufweisend:
einen Halterungskörper (12) mit wenigstens einem Haltemittel (14), insbesondere einer Klemmrippe (15),
wobei das wenigstens eine Haltemittel (14) ausgestaltet ist, den Endabschnitt (28) der elektrischen Leitung (26) am Halterungskörper (12) zu fixieren, um eine Relativbewegung des flexiblen Abschnitts (28a) relativ zum Versteifungsabschnitt (28b) einzuschränken,
wobei der Halterungskörper (12) ausgestaltet ist, an dem Elektromotor (50) anbringbar zu sein.

2. Motorkabelhalterung (10) nach Anspruch 1,
wobei die Motorkabelhalterung (10) wenigstens eine mit dem Halterungskörper (12) verbundene Rasteinrichtung (18), insbesondere mindestens eine Rastnase (19), aufweist,
wobei die Rasteinrichtung (18) ausgestaltet ist, mit mindestens einem Rastabschnitt (30) des Elektromotors (50), insbesondere des Motorbunds (32), in eine form- und/oder kraftschlüssige Verbindung bringbar zu sein.

3. Motorkabelhalterung (10) nach Anspruch 1 oder 2,
wobei die Rasteinrichtung (18), insbesondere die Rastnase (19), eine Schnappverbindungsaufnahme aufweist.

4. Motorkabelhalterung (10) nach einem der vorhergehenden Ansprüche,
wobei der Halterungskörper (12) ausgestaltet ist, über einen Presssitz mit einem Kopplungsabschnitt (34) des Elektromotors (50), insbesondere dem Motorbund (32) des Elektromotors (50), verbindbar zu sein.

5. Motorkabelhalterung (10) nach einem der vorhergehenden Ansprüche,
wobei die Motorkabelhalterung (10) wenigstens eine, mit dem Halterungskörper (12) verbundene Verdrehsicherung (20) aufweist,
wobei die Verdrehsicherung (20) ausgestaltet ist, mit dem Elektromotor (50), vorzugsweise mit den Kontaktpins (24), eine form- und oder kraftschlüssige Verbindung einzugehen.

6. Motorkabelhalterung (10) nach einem der vorhergehenden Ansprüche,
wobei der Halterungskörper (12) ringförmig ausgestaltet ist.

7. Motorkabelhalterung (10) nach einem der vorhergehenden Ansprüche,
wobei die Motorkabelhalterung (10) zwei Haltemittel (14) aufweist, die jeweils zur Fixierung eines mit einem Kontaktpin (24) des Motors (50) verbundenen, insbesondere verlöteten, Kabels (26) eingerichtet sind, und die insbesondere an gegenüberliegenden Positionen des Halterungskörpers (12) angeordnet sind.

8. Motorkabelhalterung (10) nach einem der vorhergehenden Ansprüche,
wobei die Motorkabelhalterung (10) durch ein generatives Fertigungsverfahren hergestellt ist.

9. Motorkabelhalterung (10) nach einem der vorhergehenden Ansprüche,
wobei die Motorkabelhalterung (10) durch ein Spritzgussverfahren hergestellt ist.

10. Motorkabelhalterung (10) nach einem der vorhergehenden Ansprüche,
wobei die Motorkabelhalterung (10) einstückig hergestellt ist.

11. Motorkabelhalterung (10) nach einem der vorhergehenden Ansprüche,
wobei die Motorkabelhalterung (10) mindestens einen Steg (16) aufweist, der an seinen beiden Enden mit dem Halterungskörper (12), insbesondere einstückig, verbunden ist, wobei zwischen Steg (16) und Halterungskörper (12) eine Aussparung und/oder eine Öffnung (21) des Halterungskörpers gebildet ist.

12. Motorkabelhalterung (10) nach einem der vorhergehenden Ansprüche,
wobei die Motorkabelhalterung (10) ein Polyamid, vorzugsweise PA6 oder PA12 umfasst.

13. Elektromotor (50), insbesondere DC-Motor, aufweisend eine Motorkabelhalterung (10), insbesondere eine Motorkabelhalterung (10) nach einem der Ansprüche 1 bis 12, aufweisend
ein mit einem Stator des Elektromotors verbundenes Statorelement, insbesondere einen Motorbund (32), aus dem ein Ende einer rotierenden Welle (36) des Elektromotors (50) austritt,
mindestens eine, insbesondere zwei elektrische Leitungen (26) mit jeweils einem flexiblen Endabschnitt (28), wobei der flexible Endabschnitt (28) einen am Kontaktpin endenden Versteifungsabschnitt (28b) und einen sich daran anschließenden flexiblen Abschnitt (28a) umfasst,
mindestens ein, insbesondere zwei Kontakpins (24),
wobei der Endabschnitt (28) der mindestens einen elektrischen Leitung (26) mit dem mindestens einen Kontaktpin (24) verbunden ist, insbesondere gelötet ist,
wobei die Motorkabelhalterung (10) einen Halterungskörper (12) und mindestens ein Haltemittel (14) aufweist,
wobei der Halterungskörper (12) mit dem Statorelement (32) verbunden ist und das mindestens eine Haltemittel (14) den Endabschnitt (28) der mindestens einen elektrischen Leitung (26) fixiert, um eine Relativbewegung des flexiblen Abschnitts (28a) relativ zum Versteifungsabschnitt (28b) einzuschränken.

14. Elektrowerkzeug (100) aufweisend einen Elektromotor (50) nach Anspruch 13,
wobei insbesondere der Elektromotor (50) ein Gleichstrommotor ist.

15. Elektrowerkzeug (100) nach Anspruch 14,
wobei das Elektrowerkzeug (100) ein oszillierendes Werkzeug ist.
